# EUROPEAN PATENT SPECIFICATION

(11) **EP 3 140 107 B1**
(45) Date of publication and mention of the grant of the patent: **15.08.2018**
(21) Application number: 15721532.8
(22) Date of filing: 04.05.2015
(51) Int. Cl.: B29C 73/02, B29C 70/54

(54) **COMPLETING A FIBER COMPOSITE PART AND A KIT OF PARTS FOR CARRYING OUT SAID METHOD**
KOMPLETTIERUNG EINES FASERVERBUNDSTOFFTEILS UND EIN KIT AUS TEILEN ZUR DURCHFÜHRUNG DES BESAGTEN VERFAHRENS
FINITION D'UN ÉLÉMENT COMPOSITE EN FIBRES ET ENSEMBLE DE PIÈCES DESTINÉ À LA MISE EN OEUVRE DUDIT PROCÉDÉ

(30) Priority: 05.05.2014 CH 668142014
(43) Date of publication of application: 15.03.2017
(73) Proprietor: WoodWelding AG, 6362 Stansstad (CH)
(72) Inventor: MAYER, Jörg, 5702 Niederlenz (CH); AESCHLIMANN, Marcel, 2514 Ligerz (CH); TORRIANI, Laurent, 2516 Lamboing (CH); POSCHNER, Patricia, 3045 Meikirch (CH)
(74) Representative: Frei Patent Attorneys
(86) International application number: PCT/CH2015/000072
(87) International publication number: WO 2015/168815

(56) References cited:
- WO-A1-00/38916
- WO-A1-2013/071422
- WO-A2-02/02300
- US-A- 5 676 979
- US-A1- 2012 040 106

## Description

### FIELD OF THE INVENTION

The invention is in the fields of mechanical engineering and construction, especially mechanical construction, for example automotive engineering, aircraft construction, shipbuilding, machine construction, toy construction etc. It more particularly relates to processes of manufacturing articles of fiber-reinforced resin composite parts.

### BACKGROUND OF THE INVENTION

In the automotive, aviation and other industries, there has been a tendency to move away from steel constructions and to use lightweight material such as carbon fiber reinforced polymers instead.

Fiber reinforced composite parts for these industries often have to be manufactured with a high fiber content to satisfy the mechanical strength requirements they are subject to. Also, the fibers often need to be continuous fibers oriented in a well-defined manner. Manufacturing methods for these articles, such as Resin Transfer Molding (RTM) comprise placing a structure of the reinforcing material in a mold, injecting a liquid matrix and then causing the matrix material to harden. In variants, pre-impregnated structures of the articles may be used. Also, sometimes a vacuum is applied while injecting the matrix.
In reality, often when composite parts with a high fiber content are manufactured in this way, incomplete impregnation resulting in pores in the composite part is a problem. Such pores for some applications may be tolerated to a certain extent, but may constitute a cause of failure for other applications and/or if they are present in too high quantities.
To solve this problem, in addition to applying a vacuum it has also been proposed to apply sonic or ultrasonic vibrations to the mold during the matrix injection and prior to solidification of the matrix material so as to reduce the level of porosity. However, while this process may reduce the porosity to some extent, for manufacturing larger parts it imposes significant additional requirements on instrumentation and is complex and energy consuming. For this reason, it has become accepted only for niche applications.
Rather, often the composite parts are visually inspected after the manufacturing process. When defects are detected, either the part is disposed of, or a defective portion is cut out and replaced by a replacement piece. This turns out to be a rather uneconomical process.

WO2013/071422 discloses a method for impregnating fibrous reinforcement material with a matrix in a mould by transmitting ultrasound to the matrix-infused material. WO00/38916 discloses a kit for repairing a flaw or void in a body, the kit including a high frequency vibrating apparatus, repair material and a cover sheet or strip.

It is an object of the invention to provide approaches that overcome disadvantages of the prior art and that provide a practical, efficient solution to the problem of insufficient impregnation of fibrous structures in fiber composite parts.

### SUMMARY OF THE INVENTION

According to an aspect of the invention, a method of completing a fiber composite part is provided, the method comprising the steps of
- providing a pre-manufactured fiber composite part, the fiber composite part comprising a structure of fibers embedded in a matrix of a resin, the resin being hardened;
- inspecting the composite part for portions of the structure of fibers that are insufficiently impregnated by the hardened resin;
- applying a preparation of a hardenable material to a surface portion where an identified structure portion of the structure of fibers that is insufficiently impregnated is exposed;
- applying mechanical vibration to the preparation applied to the surface portion to cause material of the preparation to impregnate the structure portion in a flowable state, and
- causing the material to solidify.

In this text, the term "fiber composite part" generally refers to parts that comprise a structure of fibers, such as an arrangement of fiber bundles, a textile structure of fibers or any other structure of fibers, and a matrix material in which the fibers are embedded. Often, in such a structure, the fibers are so-called "continuous fibers", i.e. fibers with lengths that may exceed 10 mm. The fibers will for example be carbon fibers. Such fiber composites are often referred to as "carbon fiber composites" or "carbon-fiber-reinforced polymers" or "carbon-fiber-reinforced plastics"; often also just as "carbon". Other fibers than carbon fibers, such as glass aramide or high strength polyethylene (Dyneema) fibers, are not excluded; this includes the possibility of the fiber structure comprising fibers of different materials, such as carbon fibers and glass fibers.

The preparation may especially comprise or even consist of the matrix material. Alternatively, it may comprise an other hardenable material, such as an other thermosetting polymer. In these, the step of causing the material to solidify may simply comprise waiting until the material has hardened. In addition or as an alternative, the material of the preparation may be such that solidification is induced at least or accelerated by the mechanical vibration. Then, the step of causing the material to solidify may comprise keeping applying the mechanical vibration until the material has at least partly solidified.

As an alternative to a curable material, the preparation may comprise thermoplastic material. Then, the preparation may initially be in a flowable or non-flowable state. In the latter case, the mechanical vibration may be applied to the non-flowable preparation until at least a part thereof becomes flowable and is caused to impregnate the structure portion. Causing the material to solidify may then simply comprise allowing the thermoplastic material to cool after the vibration has stopped.

The method may further comprise pressing a tool by which the vibration is applied towards the surface portion while the vibration is applied.

The composite part during the step of applying the vibration may be placed against a support, especially a non-vibrating support.

A tool by which the vibration is applied may be a sonotrode coupled to a device for generating the vibration. Such a device may for example be a hand-held electrically powered device comprising appropriate means, such as a piezoelectric transducer, to generate the vibrations.

The mechanical vibration may be longitudinal vibration; the tool by which the vibration is applied may vibrate essentially perpendicular to the surface portion (and the tool is also pressed into the longitudinal direction); this does not exclude lateral forces in the tool, for example for moving the tool over the surface portion.

The mechanical vibration may be ultrasonic vibration, for example vibration of a frequency between 15 KHz and 200 kHz, especially between 20 KHz and 60 kHz. For typical sizes of defects (for example with characteristic lateral dimensions of about 1-5 cm) and dimensions of composite parts for example for the automotive industry (car body parts), a power of around 100-200 W has turned out to be sufficient, although the power to be applied may vary strongly depending on the application.

In any embodiment, there exists the option of carrying out the method by a tool that comprises an automatic control of the pressing force. For example, the device may be configured to switch the vibrations on only if a certain minimal pressing force is applied, and/or to switch the vibrations off as soon as a certain maximum pressing force is achieved. Especially the latter may be beneficial for parts of which an undesired deformation must be avoided, such as certain car body parts.

To this end, according to a first option the capability of piezoelectric transducers to measure an applied pressure may be used. According to a second option, a special mechanism can be present in the device. For example, a unit that contains the transducer and to which the tool (sonotrode) is attached may be mounted slideable against a spring force within a casing. The device may be configured so that the vibrations can be switched on only if the unit is displaced by a certain minimal displacement and/or only if it is not displaced by more than a certain maximum displacement. To achieve this, means well-known in the art such as light barriers, sliding electrical contacts, position sensitive switches or other means may be used. Also a collapsible sleeve or similar of the kind described hereinafter may contain or operate a contact or switch or similar to control the pressing force.

By the vibrations, the flowable material of the preparation is caused to interpenetrate the structure of fibers, possible voids in the material are caused to evade. The vibrations cause small motions of the fibers themselves, and this helps to prevent spots from not being impregnated at all.

The vibration frequency can influence the manner in which the vibrations act. A lower frequency will lead to a longer wavelength. By adapting the wavelength to the dimensions of the part to be completed, the operator can have an influence on in which depth the effect of the vibrations is the strongest and on whether the energy is primarily absorbed in a 'near field' regime, in a 'far field' regime or in an intermediate regime.

A second effect, which may depend on the material of the preparation, is that a curing/hardening process may be accelerated by the mechanical vibration. In an example, a commercially available two-component epoxy adhesive was used as test material for the preparation to eliminate a defect having a size of about 1 cm (approximate diameter). The process took less than half a minute, and when the vibrations were turned off, not only the resin-free (so called "dry") fiber material was, as far as susceptible to visible inspection, fully impregnated by the resin, but also the adhesive had already cured to an extent that it was not deformable any more. The curing process thus was faster than it would have been without the ultrasonic vibration by at least an order of magnitude. This may be attributed to the heating of the adhesive due to the vibration, and to the fact that at higher temperature the chemical reactions that are involved in the curing are faster. As a role of thumb, a temperature increase of about 10°C reduces the setting time by 50%. In the experimental process, a short term, ultrasound induced temperature increase of about 100°C was observed.

A further advantage of the invention is that also incompletely impregnated portions (defects) that reach through the composite part can be completed by being accessed from one side only. This is in contrast to vacuum infiltration for example. This makes possible that parts of profiles that so far could not be repaired can be completed by the method according to the invention.

A further advantage, especially if approaches for confining, pumping and/or applying the preparation through an interior channel described in more detail hereinafter, is that the method also works in situations where a prior art approach of just freely dosing a resin on a defect would fail because the resin would flow or drip away, for example if the surface portion to which the preparation is applied is not horizontal. Rather, the approaches according to embodiments of the invention also work if the surface portion is non-horizontal, for example even vertical or even overhead.

The various embodiments of the methods described herein may be applied in manufacturing processes, especially for repairing defects that arise due to insufficient impregnation during manufacturing. Further occurrences of insufficient impregnation, to which the invention is applicable, may comprise defects that have arisen due to later failures, for example after crashes that have caused local defects of the fiber structure, whereafter a defect is covered by a structure portion of fibers that initially is not impregnated or only partly impregnated (thus insufficiently impregnated) and thereafter treated by the method according to embodiments of the invention.

In a group of embodiments, the method may comprise the additional step of laterally confining a flow of the preparation while the mechanical vibration is applied. The term "lateral" in this refers to directions parallel to the surface portion.

In embodiments, laterally confining the preparation comprises providing the preparation in a receptacle and pressing the tool, by which the vibrations are applied, towards the surface portion while the preparation or at least a portion thereof is within the receptacle.

Such a receptacle may especially be open towards a distal side, i.e. a side facing towards the surface portion. It may be entirely open towards the distal side, or may comprise openings facing the distal side or have open pores open towards the distal side.

In a first sub-group of these embodiments, laterally confining comprises providing the preparation surrounded by a non-flowable sleeve, which during the step of applying the vibration is pressed against the surface portion surrounding at least a part of the structure portion (defect). Such a non-flowable sleeve is an example of a receptacle in which the preparation is held during the step of applying.

Such a sleeve may be provided to be collapsible. According to an alternative, the tool by which the vibration is applied is slideable in longitudinal directions within the sleeve, the sleeve laterally and tightly surrounding tool.

In a second sub-group of these embodiments, the preparation is provided in a structure with pores open at least towards the surface portion.

Such structure may for example be an open porous, deformable structure serving as the receptacle or as part thereof, such as a sponge-like structure or a corresponding structure with an anisotropic pore structure.

By way of example, such an open porous deformable structure may comprise an open porous foam of a suitable material, such as polyurethane, with a porosity of for example at least 75%, especially between 80% and 95%. There exist for example foams of this kind with a high porosity and with a trabecular structure yielding a high permeability for a contained flowable substance.

An open porous structure may be optionally provided with a lateral closed coating to keep material of the preparation from being pressed out of the deformable structure laterally.

In addition or as an alternative, such an open porous structure may be provided such as to have an anisotropic porosity, such that it is permeable in longitudinal directions (out-of-plane directions) but not permeable or permeable to a substantially lower extent in lateral directions (in-plane directions).

In addition or as yet another alternative, the receptacle may be a cushion filled by the preparation, the cushion having pores on the underside, i.e. the side that faces the surface portion while the tool applies the pressure and the vibrations from the other side. Optionally, such a cushion may further be filled by an open porous foam in the pores of which the preparation is kept.

In embodiments, the mechanical vibration is coupled into the preparation by a sonotrode equipped for acting as a sonic pump on the preparation. In this text, the definition of "sonic pump" includes ultrasonic pumps, i.e. the pump effect may apply for both, vibrations in audible frequency ranges and vibrations in ultrasonic frequencies.

For acting as a sonic pump, it is not sufficient if the sonotrode is subject to mere axial vibrations (up-and-down vibrations in the proximodistal directions) of a flat distal end face. Rather, the pumping effects in the up and down directions of such mere axial vibrations of a flat distal end face tend to compensate each other, and in addition it could be observed that this kind of vibration tends to atomize the preparation instead of efficiently driving it into the structure of fibers.

Thus, to be capable of acting as sonic pump on the preparation, the sonotrode is designed so that its distal end surface is different from a flat surface that is merely subject to axial vibrations. Rather, one of or a combination of two designs A and B may apply:
A. The sonotrode may be designed to have a laterally projecting distal wing portion. To this end, the sonotrode may for example have a distal disc attached to a shaft proximally thereof. The portions of the disc that extend sideways from the shaft then serve as the wing portion. Alternatively, the sonotrode may have a plurality of the wing portions, projecting from a shaft into different lateral directions, or may have a wing portion into one lateral direction only (for example for repairing defects along an interior edge) etc. Such a laterally projecting wing portion will be subject to bending vibrations. These have been observed to have a pumping effect on the preparation which thereby both, is confined better than with a just axially vibrating sonotrode and is efficiently pumped into the structure of fibers. The laterally projecting wing portion may be one-piece with the rest of the sonotrode, or it may belong to a separate, exchangeable foot element attachable to the remaining sonotrode.
B. The distal end face of the sonotrode is structured, i.e. different from flat.

For design A., the sonotrode may for example be essentially cylindrical but with a neck portion (for example formed by a circumferential groove) close to its distal end. The portion distally of the neck then acts as the wing portion, and the neck itself forms the shaft. Alternatively, the sonotrode may consist of an elongate shaft with the wing portion attached to its distal end.

In accordance with a possibility for design B, the sonotrode may for example according to a first option be designed with a peripheral ridge, which may extend continuously, without interruption, along the full circumference or alternatively be interrupted. The interruptions then form channels connecting an interior inside of the peripheral ridge with an exterior.

It has surprisingly been found that the sonotrode with an interrupted peripheral ridge exhibits an efficient pumping effect, and that the impregnation is especially efficient with this embodiment. Especially, it has been observed that hardenable material that was initially displaced laterally of the sonotrode is pumped in through the channels and into the structure of fibers. In this, the sonotrode can be merely pressed against the fiber composite part, without any need to displace it laterally or for axial back and forth movements with respect to the surface.

In accordance with a further possibility, the distal end of the sonotrode may be essentially flat but comprise a plurality of pockets formed by indentations. Also in this further possibility, there exists the option of having channels between the pockets and the outside. In addition or as an alternative, optional channels may exist between the pockets.

It has been observed that the if the sonotrode is designed to act as a sonic pump in the discussed manner according to option A or B, a lateral confinement is achieved, and additional confinement means such as a receptacle of the hereinbefore discussed kind not necessary any more (though they may still be used).

Also, it has been observed that option A works better for large area sonotrodes, whereas option B is suitable for large as well as for smaller areas. Especially, it has been observed that for option A it is advantageous if the distal end face area has a diameter of at least 20 mmm especially at least 40 mm or at least 50 mm. In examples, it was especially favorable if the distal end face area (disc area) of a sonotrode according to option A was beteween 50 mm and 80 mm.

For option B, the positive effect can be observed independent of the sonotrode size and, within certain boundaries, also independent of a curvature of the distal end face. Especially, a curvature can be in one direction (for treatment of edges) or double-curved (for corners), in both cases convex or concave. Especially, since in industrial manufacturing processes defects may occur predominantly at same places, the sonotrode size and curvature may be adapted to the respective place. This will enhance the effectivity of the process in such situations.

In a group of embodiments, the preparation may in for example be applied to the surface portion in a manner that the whole defect (i.e. the entire surface portion in which the structure of fibers is exposed) is covered by the preparation.

In a first sub-group of this group, the tool, by which the mechanical vibration is applied, laterally extends over the whole defect. Then, the defect is repaired in a one-step procedure.

In a second sub-group of this group, the tool is moved laterally over the defect in a pressing-iron-like manner or iteratively at different positions.

In an other group of embodiments, the preparation is applied to a part of the defect only, and after application of the vibrations at one place, an other preparation is applied to an other part, etc., until the whole defect is amended.

In both groups, the method may comprise choosing one receptacle of different available receptacles, depending on the size and shape of the defect, prior to the step of applying the preparation.

In an even further group of embodiments, at least a portion of the preparation is applied while the vibrations are applied, for example continuously. For example the sonotrode, by which the vibrations are applied, may be chosen to comprise an interior channel leading from a site accessible from proximally to its distal end, and the preparation is applied through the channel in an interior of the sonotrode, for example while the sonotrode is pressed against the fiber composite part. In this, a tube (or other vessel through which the preparation is applied) may be vibrationally de-coupled from the sonotrode so that the preparation does not absorb substantial amounts of vibration energy until it is in contact with the structure of fibers. Such decoupling can be achieved by one or a combination of:
- mounting the tube (or other vessel) to a location of a vibration node of the sonotrode in a manner that it is not in physical contact with other locations of the sonotrode.
- Providing the tube with dimensions that are smaller than the dimension of the channel in the interior of the sonotrode, especially so that it can be kept at a distance of at least half a wavelength of the vibrations in the sonotrode. In the example of a interior channel of circular cross section and circular tube, the tube diameter may be smaller than the inner diameter of the channel by at least a wavelength. For vibrations of the hereinbefore discussed kind and frequencies, the distance (gap) between the sonotrode and the tube should, as a rule of thumb, be at least about 20 µm, thus a tube diameter should be lower than an inner diameter of the channel by at least 40 µm.
   In such a set-up it is in most cases not necessary to provide separate means for centering the tube in the channel. Rather, the mechanical vibration will have a self-centering effect. Thus, in embodiments, the tube (or other vessel) is freely suspended within a channel in the sonotrode.
   An example of a sonotrode having a channel is a ring sonotrode, where the interior of the ring constitutes the channel.

In all embodiments, the preparation may be provided pre-made, for example already within a receptacle. In this, the preparation may for example be stored at a cooled place and taken out there from only shortly before being applied. If the preparation comprises a resin (for example consists of a resin), alternatively, it may be prepared immediately prior to being applied, especially if it has a tendency to harden at room temperature without any energy input. To this end, suitable tools, for example a dosing two-component mixer and applicator may be provided.

In particular, in all embodiments, the preparation may especially initially be provided in a frozen, non-flowable state.

For example if the preparation is provided in a receptacle, such as an open porous, deformable structure or a cushion-like structure, the preparation may be frozen in a pre-made state immediately after having been mixed and then inserted in the receptacle. By this, the preparation can be kept in the pre-made state considerably longer than if it for example was kept at room temperature.

In another example, the preparation can be kept in a pre-made state as a frozen drop, for example of a desired shape into which it is cast an in which it is then frozen. In this alternative example, the fact that the preparation is applied in a frozen state contributes to an at least initial lateral confinement.

In many embodiments in which the preparation is of a curable material, the mechanical vibration is applied to the preparation that is initially separate from the fiber composite part until material of the preparation has impregnated the previously insufficiently impregnated structure portion and then until this material has cured at least to an extent that it is not flowable any more.

In a variant of these embodiments, the mechanical vibration is applied in a two-step procedure. In a first step, the vibration is applied in the manner described hereinbefore, for example with lateral confinement and/or pumping, until the material has impregnated the fibers. However, the vibration is stopped while the material is still flowable at least to some extent. Then, a separation element, especially a flexible, flat element such as a foil or a membrane or a sheet is placed on the impregnated structure portion. Alternatively, a separation element may be formed by a distal end of the sonotrode used for the second vibration applying step, for example a non-stick coating of for example PTFE (known as Teflon), Fluoro-Choloro-Polyolefines, amorphous carbon etc. Thereafter, in the second vibration applying step the vibration is applied via the separation element until the material is cured and not flowable any more. This second step may especially serve for smoothing out the surface of the completed fiber composite part. After the second vibration applying step, the separation element may be removed.

For this possible second vibration applying step, the same sonotrode as in the first step may be used, or a different sonotrode may be used. Especially, if for a pumping effect in the first step a sonotrode with a structured distal surface is used, then for the second vibration applying step a sonotrode with a smooth distal surface may be applied. Also lateral dimensions may vary between a first and second sonotrode; for example the second sonotrode may be chosen to have a larger lateral extension.

In a special group of embodiments, a sonotrode having a main body and a replaceable foot portion is used. A foot portion may be mechanically connected to the main body by any suitable reversible fastening means, such as a snap connection, a bayonet fitting, a press fit, a thread, any other connection or a combination of these connections.

The foot portion may be of a same material as the main body or may be of a different material, for example of a low-cost material if the foot portion is designed to be disposable. Especially, the main body may be metallic, and the foot portion may be of a same or of a different metal, or it may be of a plastic. The latter may especially be advantageous for the second vibration application step in cases where a two-step procedure of the mentioned kind is carried out because it makes possible that the sonotrode foot portion is provided with an anti-stick coating or consists of a polymer that does not melt under the conditions during the process and to which the preparation material cannot adhere, such as PTFE or a Fluoro-Choloro-Polyolefine polymer.

The concept of the replaceable foot portion may be used in order to have different sonotrode shapes and/or dimensions for different fiber composite parts and different shapes and sizes of 'defects' (insufficiently impregnated portions). In addition or as an alternative, the concept may be used for the above-mentioned two-step procedure, for example if the first step is carried out by a sonotrode with a distal structure and/or with a smaller sonotrode distal end coupling area than the second step.

In any embodiment, there is the option of vacuum assisting. To this end, the support, against which the composite part is positioned during the step of applying the vibrations, is chosen to have a plurality of holes to which an underpressure is applied, so that air remaining in the defect is drawn out.

The invention also concerns a method of manufacturing a fiber composite part, the method comprising the steps of placing a structure of fibers in a mold, thereafter injecting a resin in the mold, hardening the resin, and completing the fiber composite part by the method described hereinbefore.

The invention further contains a kit of parts for carrying out the method of completing, the kit of parts comprising raw material of a hardenable preparation, such as components of a multiple-component resin, a plurality of receptacles for laterally confining a flow of the penetration, and a vibration application tool capable of applying the vibrations to the preparation when the same is within the receptacle. Especially, such a kit of parts may comprise receptacles and possibly also tools of different dimensions to adapt to different shapes and sizes of defects.

### BRIEF DESCRIPTION OF THE DRAWINGS

In the following, ways to carry out the invention and embodiments are described referring to drawings. The drawings are schematical. In the drawings, same reference numerals refer to same or analogous elements. The drawings show:
- Figs. 1a and 1b, in top view and in section, respectively, a defective fiber reinforced composite part;
- Fig. 2 a first example of a method according to the invention;
- Fig. 3 the possibility of vacuum assisting examples of a method according to the invention;
- Figs. 4a and b, a second example of a method according to the invention during two subsequent stages;
- Fig. 5 a third example of a method according to the invention;
- Figs. 6-8 different variants of yet an other example;
- Fig. 9 depicts an example of an arrangement with a thermoplastic preparation;
- Fig. 10 depicts a device for applying the vibrations and a mechanical pressing force;
- Fig. 11 a further arrangement for carrying out the method according to the invention;
- Fig. 12 an illustration of the confining effect of the sonic pump;
- Fig. 13 yet another arrangement for carrying out the method according to the invention;
- Fig. 13a an illustration of a 'breathing' effect;
- Fig. 14 a bottom view of an example of a sonotrode for an arrangement as shown in Fig. 13;
- Fig. 15 a bottom view of an alternative example of a sonotrode for an arrangement as shown in Fig. 13;
- Fig. 16 an example of a method of repairing a non-plane fiber reinforced composite part;
- Figs. 17 and 18 alternative sonotrodes for repairing a non-plane fiber reinforced composite part;
- Fig. 19 an even further arrangement for carrying out the method according to the invention;
- Fig. 20 a bottom view of an alternative example of a sonotrode for an arrangement as shown in Fig. 19;
- Fig. 21 an arrangement allowing for continuous feeding of the preparation;
- Figs 22a and 22b the first and second stage, respectively, of a two-stage process; and
- Figs. 23 and 24 examples of sonotrodes with replaceable foot elements.

### DESCRIPTION OF THE PREFERRED EMBODIMENTS

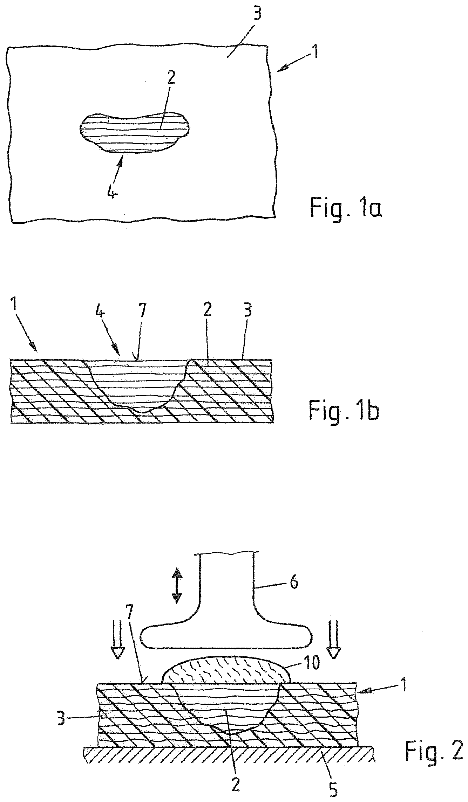

**Figures 1a and 1b** show, in top view and in section, a defective fiber composite part 1 hat has a structure of fibers 2 embedded in a matrix of hardened resin 3. For illustration purposes, in all depicted examples, the fiber composite part is assumed to have a general flattish shape, as has for example a car body part, or an aircraft's wall or the like. All examples of the invention are, however, also applicable to parts that are not flattish but have any other shape.

A defect 4 is constituted by a portion of the part where the structure 2 is insufficiently impregnated by the resin 3 so that the fibers are exposed, and possibly the fibers are not even wetted. Such a defect may be through-going or, as in Fig. 1b, not through-going.

**Figure** 2 shows the defective composite part 1 placed on a non-vibrating support 5. A preparation 10 is applied to the portion of the surface 7 where the structure of fibers is exposed. In the example of Fig. 2, the preparation 10 is a dose of a flowable, curable material, for example of a two-component mix of a resin , e.g. an epoxy or polyester resin or a thermoplastic powder, e.g. a polyamide..

A sonotrode 6 is used to apply the vibrations while being pressed towards the surface 7. This causes the flowable curable material to interpenetrate the fibers and may additionally accelerate the curing process.

As in all subsequent embodiments, an optional intermediate protecting layer (not shown), for example of a textile material or a material impervious to the preparation 10 (e.g. PTFE or Silicon films or coated papers and textiles, well known in manufacturing of fiber composite materials), may be used between the sonotrode and the preparation - alternatively, the sonotrode may be coated with such a non-adhering material (PTFE, poly-fluoro-chloro polyolefines, a-CH amorphous carbon or diamond like carbon),.

The embodiment of Fig. 2 is especially suited for situations where the tendency of the curable material to evade the pressure by the sonotrode 6 is minimal (for example because the material has a high viscosity) and/or can be coped with (for example if the area size of the defect is comparably large compared to its depth).

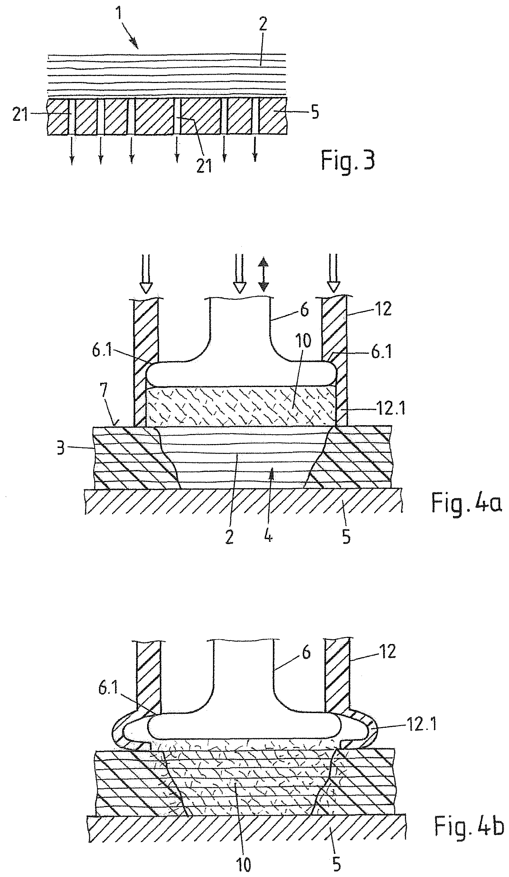

**Figure 3** yet depicts an option that exists for all examples. The non-vibrating support 5 is provided with a plurality of suction holes 21 through which a vacuum can be applied.

**Figures 4a and 4b** show a first example in which the preparation is kept in a receptacle during the step of applying the vibration. The receptacle is a sleeve 12, for example of plastics like polyurethane. At least the distal portion 12.1 of the sleeve is collapsible.

In the depicted example, the sleeve is attached to the sonotrode 6 along a circumferential region 6.1 thereof so as to close off the contained volume of the preparation 10 towards the upper (proximal) side.

For the process, the preparation 10 and the arrangement that comprises the sonotrode 6 and the sleeve 12 are placed on the surface 7, with the distal ends of the sleeve in contact with the surface 7. Then the sonotrode 6 is pressed towards the surface 7 while mechanical vibration is coupled into the sonotrode.

Figure 4b shows the set-up towards the end of this process, with the sonotrode 6 advanced almost to the surface 7, with the collapsible end 12.1 of the sleeve 12 bulged out and with the preparation 10 impregnating the not previously impregnated portions of the fiber structure 3.

In a variant, it would be possible to not attach the sleeve to the sonotrode but keep the sonotrode shiftable in a piston-like manner within the sleeve. In this variant, it is advantageous to tightly fit the sleeve to the sonotrode. As a further possibility, such a loose fitting, flexible sleeve would allow to cover the defect and move the sonotrode inside the sleeve. The latter would allow to minimize the emission of resin fumes during the impregnation and curing process, especially if combined with a fume suction unit providing a slight pressure drop inside the sleeve.

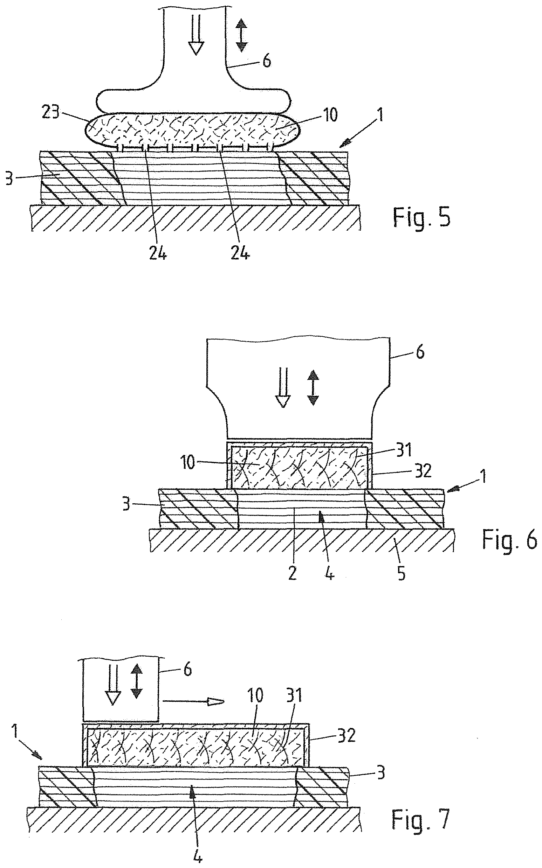

The embodiment of Figure 5 is distinct from the one of Figures 4a and 4b in that the receptacle is not a sleeve but a cushion 23 with a plurality of holes 24 facing towards the surface 7. The cushion 23 does not have any holes facing laterally or proximally but is closed off towards lateral sides and towards the sonotrode. For the process, the sonotrode 6 is pressed against the proximal side of the cusion 23 while mechanical vibration is coupled into the sonotrode 6, so as to press the preparation 10 out of the holes 24 while at the same time the cushion transmits the vibration to the interface to the part 1.

In **Figure 6****,** the receptacle is an open porous foam 31 soaked by the preparation 10. In the depicted embodiment, the foam 31 comprises an optional coating 32 impervious to the material of the preparation. The coating may be present at least on the lateral surfaces, in the depicted embodiment it is additionally present on the proximal surface so that the sonotrode does not come into direct contact with the preparation 10.

The example of **Figure 7** is distinct from the one of Figure 6 in that the sonotrode 6 does not laterally extend over the entire receptacle but has a smaller lateral extension than the latter. During the step of applying the vibration, the sonotrode is placed at some place on the foam and pressed towards the surface until the foam is compressed underneath the sonotrode and flowable material of the preparation has been pressed into the structure 2 of fibers. Then, the sonotrode is caused to slide sideways over the foam 31 to effectively iron the preparation 10 into the structure. Alternatively, the sonotrode could be placed on one spot after the other so as to force the preparation into the structure 2 of fibers in a step-by-step process.

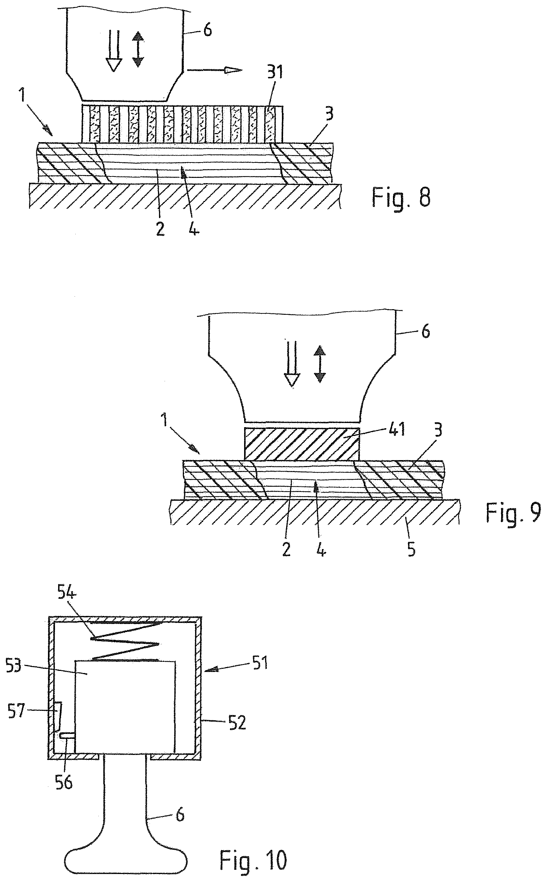

The variant of **Figure** 8 is distinct from the examples of Figures 6 and 7 in that the foam has an anisotropic porosity, with pores oriented approximately perpendicularly to the surface so that the foam is essentially impermeable in lateral directions but well permeable in longitudinal directions.

Due to this, the receptacle does, in contrast to the previous embodiments, not have any coating.

In Figure 8, the sonotrode 6 is shown to not laterally extend over the entire receptacle but to be moved over it. However, it would equally well be possible to use a foam with anisotropic porosity in an arrangement like that of Figure 6.

The receptacles of the preparations shown in the previous figures may be available in different shapes and sizes so that an operator may choose a suitable receptacle, depending on the size and shape of the defect.

For preparing the preparation from a two-component material, for example a two-compartment syringe (one compartment per component) with a mixing head may be used. The mixing head may for example be disposable. It is possible to provide such a mixing head with an interface directly adapted to the used compartment, or to make the compartment one-piece with the mixing head. For example, the mixing head could directly interface with a coating 32 of the previously described kind.

**Figure** 9 shows an example where the preparation 41 is not of a resin but is thermoplastic. In this, the material of the preparation is not flowable initially but becomes flowable after the mechanical energy has started impinging on it and the thermoplastic material is liquefied at least in parts.

An example of a material that can be transformed from a solid state to a flowable state by mechanical energy is Poly(methyl methacrylate) (PMMA).

There may be situations where the defect 4 is too large for a single preparation. Then the above-described process - in any one of the shown embodiments - is applied firstly for one section of the defect and then is repeated at an other section until the full defect is repaired.

**Figure** 10 depicts a device 51 for applying the vibration. The device 51 may be a handheld ultrasonic device. It comprises a casing 52 and a vibration generating unit 53 inside the casing, the vibration generating unit being slideable into proximal directions against the force of at least one spring 54. The sonotrode 6 is coupled to the vibration generating unit 53. The vibration generating unit may for example comprise a piezoelectric transducer block (not explicitly shown in the figure).

The vibration generating unit comprises a unit contact 56, and the casing comprises a casing contact 57. The device is configured so that the vibrations can only be switched on if the contacts 56, 57 contact each other (additionally, it may optionally be required, that the operator operates a manual switch (not shown). The contacts 56, 57 are arranged so that the contact each other only when the vibration generating unit 53 is displaced relative to the casing 52 by a certain minimal displacement, and when the vibration generating unit is not displaced too far. Therefore, the device will only operate if the sonotrode 6 is pressed against the preparation/the surface by a certain minimal pressing force and if the pressing force does not exceed a certain upper limit.

A similar principle could be applied by other means, such as light barriers, toggle switches etc. It would also be possible make an arrangement by which the device only defines an upper limit or only defines a lower limit for the pressing force.

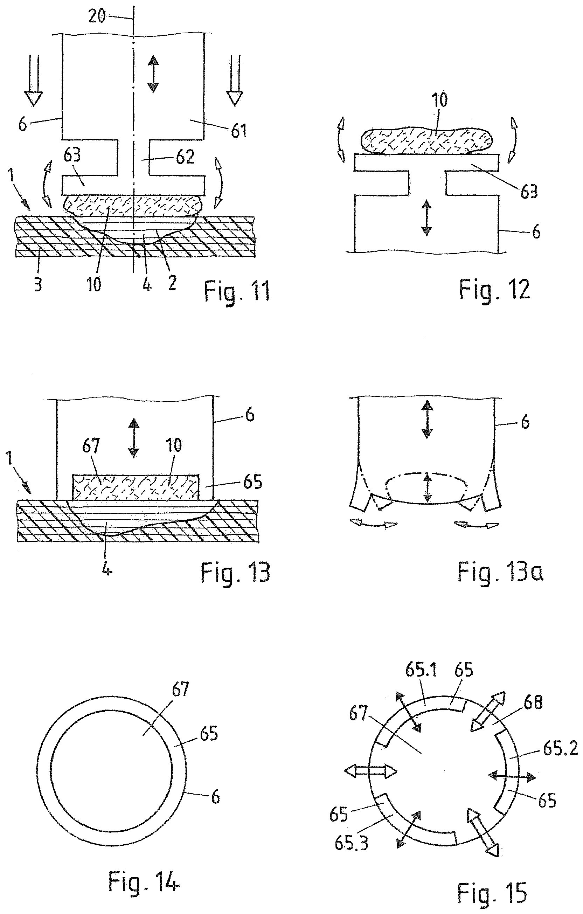

In the arrangement of Figure 11, the sonotrode 6 is of the kind having a laterally projecting wing portion 63 that is formed by a disc portion of the sonotrode, which disc portion is attached to a shaft portion 62 (which in the depicted embodiment can be viewed as a neck portion). The shaft portion 62 is held by a sonotrode main body 61. The main body 61, the shaft portion 62 and the disc portion are together of one piece.

When the sonotrode is subject to vibrations in axial directions (the axis in this is the proximodistal axis 20) about which the sonotrode may but does not need to be rotationally symmetric, this will cause bending vibrations of the wing portion 63 (see arrows). It has been observed that this causes an advantageous pumping effect on the preparation, which instead of being sprayed into various directions, as can be the case for plain sonotrodes without any lateral confinement, is efficiently confined and pumped into the structure of fibers 2 of the defect 4.

The fact that the bending vibrations of the wing portion 63 do cause a confinement could be verified by using the sonotrode of Fig. 11 with the distal end facing upwardly and with a preparation 10 placed on top of it. This is illustrated in **Figure** 12. After the vibrations were switched on, the preparation was confined on the surface of the sonotrode and did not flow sideways, nor was there a substantial amount of preparation liquid being sprayed away.

**Figure 13** illustrates an other example. The sonotrode 6 comprises a peripheral ridge 65. The peripheral ridge 65 may extend around a full circumference, as illustrated in **Figure 14****,** or it may be interrupted to leave discrete ridge portions 65.1, 65.2, 65.3 with channels 68 to an outside between them, as shown in **Figure 15****.**

It was observed that the sonotrode designs of Figures 13-15 yielded a considerably improved infiltration of the structure of fibers by the preparation 10 compared to a plain sonotrode (sonotrode with a flat distal end and with purely axial vibrations) without any additional means for confinement.

A first possible explanation for this improved behavior is a simple partial confinement of the preparation by the peripheral ridge 15 as shown in Figure 13. This confinement effect may especially contribute to the effect in the embodiment of Fig. 14.

However, especially, and somewhat surprisingly, designs like the one of Fig. 15 with channels 68 between a confined volume 67 and an outside yielded excellent results, in many cases even superior to the results achieved by a design like in Fig. 14. It was observed that when the sonotrode was held against the surface of the fiber composite part 1 while the vibrations acted, preparation initially displaced laterally to an exterior were sucked into the volume 67 and efficiently pressed into the structure of fibers.

A possible explanation for this effect is that due to the deviation from a plain sonotrode design due to the ridge 15, vibration modes different from purely axial (longitudinal) vibrations are excited in the sonotrode. Possible vibrations may include Bessel vibrations on the distal end side. Especially, such possible additional vibration modes will cause the volume 67 to be non-constant but to be subject to a breathing effect. This is very schematically (and exaggeratedly) illustrated in Figure 13a as well as by the simple double arrows in Fig. 15. More complex vibration modes may exist in addition.

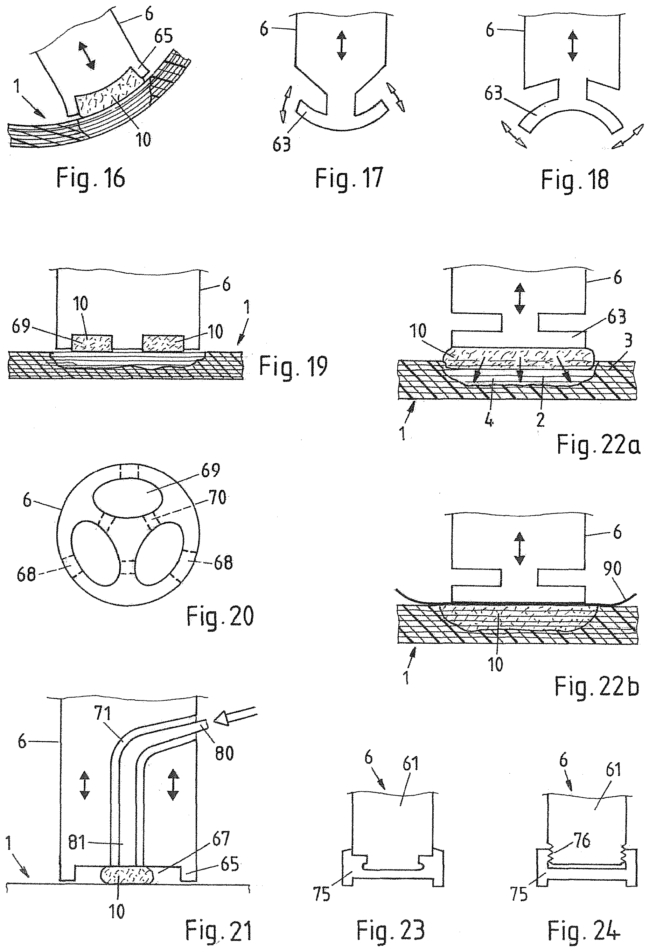

As illustrated in **Figures 16-18****,** the fiber composite part 1 to be completed ("repaired") does not need to be essentially flat, as shown in the other figures for illustration purposes, but can have other shapes, including bent, folded etc. The shapes of the sonotrodes 6 - or of replaceable foot portions thereof - may be accordingly adapted to match the surface curvatures of the defect areas in the parts. Figures 16-18 illustrate examples of sonotrodes 6 based on the principles of Fig. 13 (Fig. 16) and Fig. 11 (Figs. 17, 18), respectively, but this also applies to other sonotrode principles, with or without separate confinement means.

**Figures 19 and 20** illustrates an even further sonotrode design principle. The sonotrode has a plurality of pockets 69 at the distal end. Optional channels 68 may connect the pockets to the outside for an improved pumping effect. In addition or as an alternative inner channels 70 may connect the pockets to each other. The embodiments of Figures 13-15 may be viewed as special case of the principle of Figures 19 and 20, with the volume 67 constituting a single pocket.

**Figure 21** shows an arrangement that makes possible that the step of applying a preparation 10 to the surface portion is not necessarily carried out only before the step of applying the mechanical vibration. Rather, in this arrangement at least parts of the preparation 10 may be applied continuously or step-wise while the mechanical vibration acts or between intervals of the mechanical vibration acting. To this end, the sonotrode has a channel 71 leading to the distal end face. In principle, the preparation could be introduced directly through the channel 71. However, in practice then preparation material in the channel may absorb mechanical vibration energy, and this may lead to an at least partial hardening while the preparation is still in the channel. While there exist situations where this is desired, often it is not. Therefore, in the depicted embodiment the arrangement further comprises a tube 80 with a smaller diameter than the inner diameter of the channel 71. While the vibrations act, the tube will be self-centered in the channel 71 so that there is only minimal contact between the sonotrode 6 and the tube, and consequently the tube will be vibrationally de-coupled from the sonotrode to a large extent. This solution also features the advantage that even if preparation material remains in the tube and hardens therein after the process, only the tube being a minimal cost element needs to be disposed of after the process.

With respect to **Figures 22a and 22b****,** very schematically an embodiment of the invention as a two-step process is illustrated. The Figure shows the example of a sonotrode and configuration according to Fig. 11, however, the two step-process may be carried out also for any other configuration, with or without separate confinement means.

The two-step process may be, depending on parameters like the sonotrode design, the preparation composition, the size of the defect and others, advantageous in situations where the fiber composite part after the process needs to have a smooth surface.

In a first step, shown in Fig. 22a, the vibrations act to drive the material of the preparation 10 into the structure of fibers to impregnate the structure portion in a flowable state. The mechanical vibrations in this first step stop, however, before the material hardens. Then, a separation foil 90 with a smooth surface (Fig. 22b) is put on the top of the completed spot, and again mechanical vibrations act until the surface is smoothed out and the preparation material has hardened at least to some extent.

The sonotrode 6 used in the second step may be the sonotrode also used in the first step. Alternatively, a different sonotrode may be used in the second step, or the sonotrode may be provided with a different replaceable foot for the second step. An exchange of the sonotrode or a foot portion thereof for the second step may especially be advantageous in embodiments in which the sonotrode has a non-smooth distal end face, for example by having a ridge of the hereinbefore described kind.

**Figures 23 and 24** yet schematically illustrate sonotrodes 6 with replaceable foot portions 75. The foot portion 75 may be snapped (Fig. 23) or screwed (Fig. 24; thread 76) on the main body 61 of the sonotrode, or otherwise connected (for example by a press fit, etc.) thereto. Preferably, the connection is reversible. The foot portion 75 may be of a same material as the main body 61 or may be of a different material, for example of a low-cost material if the foot portion is designed to be disposable. In an embodiment, the foot portion is of PEEK or an other, not-melting, low adhesion Polymer like PTFE, while the main body is metallic.

Foot portions with different dimensions and shapes of distal end faces may exist.

## Claims

1. A method of completing a fiber composite part (1), the method comprising the steps of
- providing a pre-manufactured fiber composite part, the fiber composite part comprising a structure of fibers (2) embedded in a matrix of a resin (3), the resin (3) being hardened;
- inspecting the composite part (1) for portions of the structure of fibers (2) that are insufficiently impregnated by the hardened resin (3);
- applying a preparation (10) of a hardenable material to a surface portion where an identified structure portion of the structure of fibers that is insufficiently impregnated is exposed;
- applying mechanical vibration to the preparation (10) applied to the surface portion to cause material of the preparation to impregnate the structure portion in a flowable state, and
- causing the material to solidify.

2. The method according to claim 1, wherein the preparation (10) comprises the resin material of which the matrix is made.

3. The method according to claim 1 or 2, wherein the preparation (10) is of a curable material.

4. The method according to any one of the previous claims, and comprising laterally confining a flow of the preparation while the mechanical vibration is applied.

5. The method according to claim 4 comprising providing the preparation (10) in a receptacle (12, 23, 31) and pressing the tool (6), by which the vibrations are applied, towards the surface portion while the preparation or at least a portion thereof is within the receptacle.

6. The method according to claim 5, wherein the receptacle (12) is open towards a distal side and is a collapsible sleeve, wherein during the step of applying the vibration, a tool (6) by which the vibration is applied is moved towards the distal side and wherein a portion of the collapsible sleeve is kept at a constant position relative to a portion of the tool and in contact therewith.

7. The method according to any one of claims 5 or 6, wherein the receptacle (31) comprises an open porous structure with the preparation in pores of the open porous structure, and wherein for example the open porous structure is laterally coated by a coating (32) impermeable to the preparation in the flowable state, and/or wherein the open porous structure has an anisotropic porosity, such that it is permeable in longitudinal directions but not permeable or permeable to a substantially lower extent in lateral directions.

8. The method according to any one of the previous claims, wherein applying the preparation (10) to the surface portion comprises applying the preparation in a manner that the entire surface portion in which the structure of fibers is exposed is covered by the preparation, and wherein a tool (6), by which the mechanical vibration is applied, laterally extends over the whole defect or
wherein a tool (6), by which the mechanical vibration is applied, is moved laterally over the defect with the preparation (10) in a pressing-iron-like manner or iteratively at different positions.

9. The method according to any one of claims 1-7, wherein applying the preparation (10) to the surface portion comprises applying the preparation in a manner that only a part of the surface portion in which the structure of fibers is exposed is covered by the preparation, and the method comprises the further step of, after applying the vibration, applying a further preparation to an other surface part after the step and of repeating the step of applying the vibration.

10. The method according to any one of the previous claims, wherein the mechanical vibration is applied by a sonotrode (60) comprising a laterally projecting distal wing portion (63) and/or a distally facing, structured coupling-out face.

11. The method according to claim 10, wherein the sonotrode comprises a distally projecting peripheral ridge (65), which for example does not run around a full circumference but is interrupted.

12. A method of manufacturing a fiber composite part (1), the method comprising the steps of placing a structure of fibers in a mold, thereafter injecting a resin in the mold, hardening the resin, and completing the fiber composite part by the method according to any one of the previous claims.

13. A kit of parts for carrying out the method according to any one of claims 1-11, the kit comprising raw material of a hardenable preparation (10), a plurality of receptacles (12, 23, 31) for laterally confining a flow of the preparation, and a vibration application tool (6) capable of applying the vibrations to the preparation when the same is within the receptacle.

14. The kit according to claim 13, wherein the vibration application tool is a sonotrode comprising a laterally projecting distal wing portion.

15. The kit according to any one of claims 13 or 14, wherein the vibration application tool is a sonotrode comprising having a distally facing coupling-out face that is structured and/or a distally projecting peripheral ridge that does not run around a full periphery of the coupling out-face but is interrupted.

## Patentansprüche

1. Verfahren zur Komplettierung eines Faserverbundstoffteils (1), wobei das Verfahren die folgenden Schritte umfasst:
- Bereitstellen eines vorgefertigten Faserverbundstoffteils, wobei das Faserverbundstoffteil eine Struktur von Fasern (2) umfasst, die in eine Matrix eines Harzes (3) eingebettet sind, wobei das Harz (3) gehärtet ist;
- Untersuchen des Verbundstoffteils (1) auf Abschnitte der Struktur von Fasern (2), die durch das gehärtete Harz (3) unzureichend imprägniert sind;
- Aufbringen einer Zubereitung (10) eines härtungsfähigen Materials auf einen Oberflächenabschnitt, wo ein identifizierter Strukturabschnitt der Struktur von Fasern, der unzureichend imprägniert ist, exponiert ist;
- Anwenden von mechanischer Vibration auf die auf den Oberflächenabschnitt aufgebrachte Zubereitung (10), um zu bewirken, dass Material der Zubereitung den Strukturabschnitt in einem fließfähigen Zustand imprägniert, und
- Bewirken, dass das Material erstarrt.

2. Verfahren nach Anspruch 1, wobei die Zubereitung (10) das Harzmaterial umfasst, aus dem die Matrix hergestellt ist.

3. Verfahren nach Anspruch 1 oder 2, wobei die Zubereitung (10) aus einem härtbaren Material ist.

4. Verfahren nach einem der vorhergehenden Ansprüche, und welches laterales Einschließen eines Flusses der Zubereitung umfasst, während die mechanische Vibration angewendet wird.

5. Verfahren nach Anspruch 4, umfassend Bereitstellen der Zubereitung (10) in einem Gefäß (12, 23, 31) und Pressen des Werkzeugs (6), mit dem die Vibrationen angewendet werden, in Richtung des Oberflächenabschnitts, während sich die Zubereitung oder mindestens ein Abschnitt davon innerhalb des Gefäßes befindet.

6. Verfahren nach Anspruch 5, wobei das Gefäß (12) zu einer distalen Seite hin offen ist und eine zusammenfaltbare Manschette ist, wobei während des Schrittes des Anwendens der Vibration ein Werkzeug (6), mit dem die Vibration angewendet wird, in Richtung der distalen Seite bewegt wird, und wobei ein Abschnitt der zusammenfaltbaren Manschette an einer konstanten Position relativ zu einem Abschnitt des Werkzeugs und in Kontakt damit gehalten wird.

7. Verfahren nach einem der Ansprüche 5 oder 6, wobei das Gefäß (31) eine offene poröse Struktur umfasst, wobei sich die Zubereitung in Poren der offenen porösen Struktur befindet, und wobei die offene poröse Struktur beispielsweise lateral mit einer Beschichtung (32) beschichtet ist, die für die Zubereitung in dem fließfähigen Zustand undurchlässig ist, und/oder wobei die offene poröse Struktur eine anisotrope Porosität aufweist, so dass sie in Längsrichtungen durchlässig, jedoch in lateralen Richtungen nicht durchlässig oder in einem wesentlich geringeren Ausmaß durchlässig ist.

8. Verfahren nach einem der vorhergehenden Ansprüche, wobei Aufbringen der Zubereitung (10) auf den Oberflächenabschnitt Aufbringen der Zubereitung in einer Weise umfasst, dass der gesamte Oberflächenabschnitt, in dem die Struktur der Fasern exponiert ist, von der Zubereitung bedeckt ist, und wobei ein Werkzeug (6), mit dem die mechanische Vibration angewendet wird, sich lateral über den gesamten Defekt erstreckt, oder
wobei ein Werkzeug (6), mit dem mechanische Vibration angewendet wird, lateral über dem Defekt mit der Zubereitung (10) in einer Weise wie beim Anpressen eines Bügeleisens oder iterativ an unterschiedlichen Positionen bewegt wird.

9. Verfahren nach einem der Ansprüche 1 bis 7, wobei das Aufbringen der Zubereitung (10) auf den Oberflächenabschnitt Aufbringen der Zubereitung in einer Weise umfasst, dass nur ein Teil des Oberflächenabschnitts, in dem die Struktur der Fasern exponiert ist, durch die Zubereitung bedeckt wird, und wobei das Verfahren den weiteren Schritt des Aufbringens einer weiteren Zubereitung auf ein anderes Oberflächenteil nach dem Schritt des Anwendens der Vibration und das Wiederholen des Schrittes des Anwendens der Vibration umfasst.

10. Verfahren nach einem der vorhergehenden Ansprüche, wobei die mechanische Vibration durch eine Sonotrode (60) angewendet wird, die einen lateral vorspringenden distalen Flügelabschnitt (63) und/oder eine distale, strukturierte Auskopplungsfläche umfasst.

11. Verfahren nach Anspruch 10, wobei die Sonotrode einen distal vorspringenden peripheren Kamm (65) umfasst, der beispielsweise nicht einen vollständigen Umkreis umläuft, sondern Unterbrechungen aufweist.

12. Verfahren zum Fertigen eines Faserverbundstoffteils (1), wobei das Verfahren die Schritte des Platzierens einer Struktur von Fasern in einer Form, anschließendes Injizieren eines Harzes in die Form, Härten des Harzes und Komplettieren des Faserverbundstoffteils gemäß dem Verfahren nach einem der vorhergehenden Ansprüche umfasst.

13. Kit aus Teilen zum Durchführen des Verfahrens gemäß einem der Ansprüche 1 bis 11, wobei das Kit Rohmaterial einer härtungsfähigen Zubereitung (10), eine Vielzahl von Gefäßen (12, 23, 31) zum lateralen Einschließen eines Flusses der Zubereitung und ein Vibration anwendendes Werkzeug (6) umfasst, das in der Lage ist, die Vibrationen auf die Zubereitungen anzuwenden, wenn dieselbe sich innerhalb des Gefäßes befindet.

14. Kit nach Anspruch 13, wobei das Vibration anwendende Werkzeug eine Sonotrode ist, die einen lateral vorspringenden distalen Flügelabschnitt umfasst.

15. Kit nach einem der Ansprüche 13 oder 14, wobei das Vibration anwendende Werkzeug eine Sonotrode ist, die eine distale Auskopplungsfläche umfasst, die strukturiert ist, und/oder einen distal vorspringenden peripheren Kamm, der nicht eine vollständige Peripherie der Auskopplungsfläche umläuft, sondern Unterbrechungen aufweist.

## Revendications

1. Procédé de finition d'une pièce (1) en composite de fibres, le procédé comportant les étapes qui consistent à :
prévoir une pièce préfabriquée en composite de fibres, la pièce en composite de fibres comprenant une structure de fibres (2) incorporée dans une matrice de résine (3), la résine (3) ayant été durcie,
inspecter la pièce composite (1) pour vérifier si des parties des fibres (2) de la structure sont insuffisamment imprégnées par la résine durcie (3),
appliquer une préparation (10) de matériau durcissable sur une partie de surface dans laquelle on a détecté qu'une partie insuffisamment imprégnée de la structure de fibres est exposée,
appliquer des vibrations mécaniques sur la préparation (10) appliquée sur la partie de surface de manière à amener le matériau de la préparation à imprégner à un état fluide la partie de la structure et
amener le matériau à se solidifier.

2. Procédé selon la revendication 1, dans lequel la préparation (10) comprend le matériau de résine duquel la matrice est constituée.

3. Procédé selon les revendications 1 ou 2, dans lequel la préparation (10) est en matériau durcissable.

4. Procédé selon l'une quelconque des revendications précédentes et comprenant le confinement latéral de l'écoulement de la préparation pendant l'application des vibrations mécaniques.

5. Procédé selon la revendication 4, comprenant le placement de la préparation (10) dans un réceptacle (12, 23, 31) et la poussée de l'outil (6) par lequel les vibrations sont appliquées en direction de la partie de surface pendant que la préparation ou qu'au moins une partie de la préparation est située dans le réceptacle.

6. Procédé selon la revendication 5, dans lequel le réceptacle (12) est ouvert sur un côté distal et est un manchon écrasable, et dans lequel un outil (6) par lequel les vibrations sont appliquées est déplacé en direction du côté distal pendant l'étape d'application des vibrations, une partie du manchon écrasable étant maintenue à une position constante par rapport à une partie de l'outil et en contact avec cette dernière.

7. Procédé selon l'une quelconque des revendications 5 ou 6, dans lequel le réceptacle (31) comprend une structure à pores ouverts, la préparation étant placée dans les pores de la structure à pores ouverts, et par exemple la structure à pores ouverts est revêtue latéralement par un revêtement (32) imperméable vis-à-vis de la préparation à l'état fluide et/ou dans lequel la structure à pores ouverts présente une porosité anisotrope de manière à être perméable dans la direction longitudinale mais non perméable ou perméable dans une mesure essentiellement plus basse dans la direction latérale.

8. Procédé selon l'une quelconque des revendications précédentes, dans lequel l'application de la préparation (10) sur la partie de surface comprend l'application de la préparation de telle sorte que la totalité de la partie de surface dans laquelle la structure de fibres est exposée est couverte par la préparation et dans laquelle un outil (6) par lequel les vibrations mécaniques sont appliquées s'étend latéralement sur la totalité du défaut ou dans lequel un outil (6) par lequel les vibrations mécaniques sont appliquées est déplacé latéralement au-dessus du défaut avec la préparation (10), à la manière d'un fer à repasser, ou de manière itérative en différentes positions.

9. Procédé selon l'une quelconque des revendications 1 à 7, dans lequel l'application de la préparation (10) sur la partie de surface comprend l'application de la préparation de telle sorte que seule une partie de la partie de surface dans laquelle la structure de fibres est exposée est couverte par la préparation, le procédé comprenant l'étape supplémentaire qui consiste, après l'application des vibrations, d'appliquer un supplément de préparation sur une autre partie de surface après l'étape et à répéter l'étape d'application des vibrations.

10. Procédé selon l'une quelconque des revendications précédentes, dans lequel les vibrations mécaniques sont appliquées par une sonotrode (60) qui comprend une partie (63) en aile distale débordant latéralement et/ou une face de couplage structurée orientée distalement.

11. Procédé selon la revendication 10, dans lequel la sonotrode comprend une nervure périphérique (65) débordant distalement qui ne s'étend par exemple pas autour de la totalité de la circonférence mais est interrompue.

12. Procédé de fabrication d'une pièce (1) en composite de fibres, le procédé comprenant les étapes qui consistent à placer la structure de fibres dans un moule, à ensuite injecter une résine dans le moule, à durcir la résine et à finir la pièce en composite de fibres par le procédé selon l'une quelconque des revendications précédentes.

13. Trousse de pièces permettant de mettre en oeuvre le procédé selon l'une quelconque des revendications 1 à 11, la trousse comprenant une matière première consistant en une préparation durcissable (10), plusieurs réceptacles (12, 23, 31) permettant de confiner latéralement un écoulement de la préparation et un outil (6) d'application de vibrations capable d'appliquer des vibrations sur la préparation pendant que cette dernière se trouve dans le réceptacle.

14. Trousse selon la revendication 13, dans laquelle l'outil d'application de vibrations est une sonotrode qui comprend une partie en aile distale débordant latéralement.

15. Trousse selon l'une quelconque des revendications 13 ou 14, dans laquelle l'outil d'application de vibrations est une sonotrode qui comprend une face d'accouplement orientée distalement et structurée et/ou une nervure périphérique débordant distalement et qui ne s'étend pas sur toute la périphérie de la face d'accouplement mais est interrompue.
